(19) Europäisches Patentamt
European Patent Office
Office européen des brevets

(11) EP 2 647 744 B1

(12) **EUROPEAN PATENT SPECIFICATION**

(45) Date of publication and mention of the grant of the patent:
**03.01.2018 Bulletin 2018/01**

(21) Application number: **11845200.2**

(22) Date of filing: **30.11.2011**

(51) Int Cl.:
***D01F 2/02*** *(2006.01)* ***B60C 9/00*** *(2006.01)*
***C08B 16/00*** *(2006.01)*

(86) International application number:
**PCT/JP2011/077697**

(87) International publication number:
**WO 2012/074019 (07.06.2012 Gazette 2012/23)**

(54) **PURIFIED CELLULOSE FIBERS, FIBER-RUBBER COMPLEX, AND TIRE**

GEREINIGTE ZELLULOSEFASERN, FASERKAUTSCHUKKOMPLEX UND REIFEN DARAUS

FIBRES CELLULOSIQUES PURIFIÉES, COMPLEXE FIBRE-CAOUTCHOUC, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 JP 2010267898**

(43) Date of publication of application:
**09.10.2013 Bulletin 2013/41**

(73) Proprietor: **Bridgestone Corporation**
**Tokyo 104-8340 (JP)**

(72) Inventors:
- **SUGIMOTO Kenichi**
**Kodaira-shi**
**Tokyo 187-8531 (JP)**
- **KOIDE Mitsuharu**
**Kodaira-shi**
**Tokyo 187-8531 (JP)**

(74) Representative: **Lamb, Martin John Carstairs et al**
**Marks & Clerk LLP**
**90 Long Acre**
**London WC2E 9RA (GB)**

(56) References cited:
**WO-A1-2006/000197**
**WO-A1-2008/114584**
**WO-A1-2009/118262**
**JP-A- 2001 063 308**
**JP-A- 2002 002 217**
**US-A1- 2008 269 477**
**US-A1- 2010 256 352**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 647 744 B1

## Description

BACKGROUND OF THE INVENTION

Field of the Invention

The present invention relates to a purified cellulose fiber, a fiber-rubber composite, and a tire.

Priority is claimed on Japanese Patent Application No. 2010-267898, filed on November 30, 2010.

Description of Related Art

A cellulose fiber has advantages of good dimensional stability, high adhesiveness, and low temperature dependence of its elastic modulus, and thus is generally used for tires as a rayon fiber.

However, rayon discharges carbon disulfide in a manufacturing process and thus has a problem that the environmental burden is very high. Therefore, rayon does not satisfy the social requirement for manufacturing products with raw materials having a low environmental burden.

The above-mentioned characteristics of good dimensional stability, high adhesiveness, and low temperature dependence of the elastic modulus (a change in the elastic modulus with respect to a temperature change) significantly depend on the use of cellulose as the fiber material and its properties. Synthetic fibers such as polyester and nylon are used as a tire reinforcing cord; however, it is difficult to obtain the same degree of dimensional stability, adhesiveness, and elastic modulus as the cellulose fibers.

Therefore, in a current status, some tires use rayon even though the environmental burden is heavy.

In recent years, environmental conservation for the earth is required. Particularly, it is desirable to use cellulose that does not depend on fossil fuels as a raw material. The need for using carbon disulfide which has a high environmental burden during manufacture of rayon, which is the above-mentioned problem, is to melt or dissolve cellulose during fiberization (spinning).

In order to melt or dissolve cellulose, there is a need to break hydrogen bonds within molecules and between molecules in hydroxyl groups, which are present at three points per repeating unit of cellulose. In the manufacture of rayon, cellulose can be dissolved by chemically modifying the hydroxyl groups using carbon disulfide and breaking the hydrogen bonds. The hydroxyl groups are chemically modified and spinned, and thereafter, a cellulose fiber with the regenerated hydroxyl groups is generally called regenerated cellulose. Currently, the reason that cellulose fibers other than rayon are not generally used for reinforcing tires is that it is difficult to melt and dissolve cellulose in an industrial method and it is difficult to find a method of obtaining high strength and elongation at break during fiberization of cellulose.

Contrary to this, a method of manufacturing a purified cellulose fiber using N-methylmorpholine N-oxide (NMMO) as a solvent has been reported. In this method, it is possible to dissolve cellulose without chemical modification of cellulose itself and discharge of carbon disulfide. In addition, the purified cellulose fiber obtained by dry-wet spinning a cellulose-dissolved liquid manufactured in this method is superior in terms of a low environmental burden and no residue of chemically modified hydroxyl groups (Patent Literature 1).

PATENT DOCUMENTS

[Patent Literature 1] Japanese Unexamined Patent Application, First Publication No. 2006-188806
[Patent Literature 2] United States Patent No. 1943176
[Patent Literature 3] Japanese Unexamined Patent Application, First Publication No. S60-144322
[Patent Literature 4] Japanese Patent No. 4242768
[Patent Literature 5] United States Patent Application, Publication No. 2008/0269477
[Patent Literature 6] Chinese Patent No. 101328626

DISCLOSURE OF INVENTION

PROBLEMS TO BE SOLVED BY THE INVENTION

However, the purified cellulose fiber manufactured using NMMO as the solvent does not have sufficient strength nor sufficient elongation at break, and is thus difficult to be applied to the use for tires.

In general, there is a trade-off between strength and elongation at break. That is, when sufficient strength is imparted to a fiber spinned using NMMO, elongation at break is reduced. Conversely, when sufficient elongation at break

is imparted, strength is reduced. For example, the purified cellulose fiber manufactured using NMMO as the solvent described in Patent Literature 1 did not have sufficient elongation at break. Moreover, since NMMO has explosiveness, there are problems of low safety and a risk of explosion during production.

Strength is a property determined by a combination of a plurality of complex factors such as internal defects as well as molecular orientations but is not necessarily a property determined in connection with the initial elastic modulus.

However, in recent years, performance required by car tires becomes stricter in cooperation with vehicle performance. Therefore, steering stability is one of the most important performances. Tires in which the above-mentioned rayon fibers are used in manufacturing exhibit excellent steering stability.

When the initial elastic modulus of a fiber is insufficient, it has an adverse effect on steering stability and cut resistance. In addition, when elongation at break is low, tires are easily cut by an external input. Therefore, the purified cellulose fiber is required to sufficiently have both initial elastic modulus and elongation at break, and when any one of the initial elastic modulus and elongation at break is significantly lower than that of the properties of rayon used in current tires, this may affect tire performance.

On the other hand, efficiently dissolving cellulose in various types of ionic liquids has been reported (Patent Literatures 2 to 4). Dissolving of cellulose in ionic solutions is caused by solvation, and toxic substances such as carbon disulfide are not discharged in the manufacturing process of a purified cellulose fiber. Manufacture of the purified cellulose fiber is easily achieved by causing dissolved cellulose to pass through a polar solvent such as water or alcohol, or an aqueous solution of a polar solvent such as water or alcohol and an ionic liquid. Spinning of cellulose fibers using the ionic liquid has been reported in Patent Literatures 5 and 6.

Ionic liquids do not have explosiveness and have high safety during production. In addition, spinning of cellulose using the ionic liquids can be performed without the addition of antioxidants or surfactants unlike the case of using NMMO. As a result, materials and energy can be saved.

For the above-described reason, a method of manufacturing a purified cellulose fiber in which both sufficient initial elastic modulus and sufficient elongation at break are obtained using ionic liquids is preferable.

The present invention has been made taking the foregoing circumstances into consideration, and an object thereof is to provide a purified cellulose fiber which is manufactured by using raw materials with low environmental burdens, which suppresses discharge of carbon disulfide, and is excellent in initial elastic modulus and elongation at break, a fiber-rubber composite using the same, and a tire having excellent tire characteristics using the same.

MEANS TO SOLVE THE PROBLEMS

The present invention provides a purified cellulose fiber having the following characteristics, a fiber-rubber composite using the same, and a tire using the same.

(1) A purified cellulose fiber which has an initial elastic modulus of 2.30 cN/dtex or higher in a region having an elongation of 0.5% to 0.7%, in which the purified cellulose fiber is made by wet spinning or dry-wet spinning a cellulose-dissolved liquid made by dissolving a cellulose raw material in a liquid consisting of an ionic liquid, the initial elastic modulus being obtained from the gradient of a tangential line of a stress-strain curve at an elongation of 0.5 to 0.7%, wherein the strength (TB) (cN/dtex) of the purified cellulose fiber is equal to or higher than 3.9 and equal to or less than 8.2 cN/dtex.

(2) The purified cellulose fiber, in which an elongation at break (EB) (%) of the purified cellulose fiber is 10.0% or more, wherein the elongation at break is an elongation at the time of breaking of a fiber that was false-twisted four times per 10 cm and was subjected to a tensile test using a tensile tester under the conditions of 25°C and 55%RH.

(3) The purified cellulose fiber, in which the ionic liquid includes a cation portion and an anion portion, and the cation portion is one selected from the group consisting of an imidazolium ion, a pyridinium ion, an ammonium ion, and a phosphonium ion.

(4) The purified cellulose fiber according to (3), in which the cation portion is an imidazolium ion expressed by the following general formula (C1):

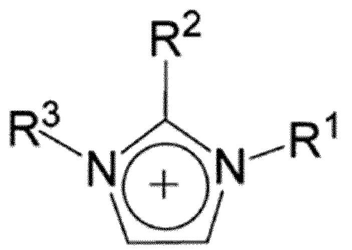

··· (C 1)

wherein in the formula, $R^1$ represents an alkyl group having 1 to 4 carbon atoms or an alkenyl group having 2 to 4 carbon atoms, $R^2$ represents a hydrogen atom or a methyl group, and $R^3$ represents one of an alkyl group having 1 to 8 carbon atoms and an alkenyl group having 2 to 8 carbon atoms.

(5) The purified cellulose fiber according to (3), in which the anion portion is formed from a compound including phosphorus.

In this case, the ionic liquid which is a compound including phosphorus in the anion portion is less likely to reduce the molecular weight of the fiber and has high heat resistance (that is, is less likely to be pyrolyzed). Since heat resistance is high, the spinning temperature can be set to be high, and thus the yield during recycling is high. In general, in a case where the purified cellulose fiber is produced industrially, an ionic liquid that flows out during fiberization with a dissolving liquid through a mixed solution of a polar solvent such as water or alcohol and the ionic liquid is recycled. During distillation or the like, heat is applied, and thus having thermal stability becomes important. In a case where the ionic liquid is reused by vaporizing liquid components other than the ionic liquid, heat is applied, and thus heat resistance has an effect on the yield of recycling.

(6) The purified cellulose fiber according to (5), in which the compound including phosphorus of the anion portion is any of a phosphate ion, a phosphonate ion, and a phosphinate ion expressed by the following general formula (C2).

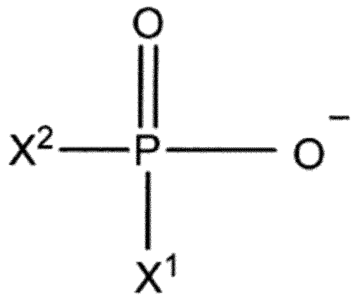

··· (C2)

wherein in the formula, $X^1$ and $X^2$ are independent, $X^1$ is a hydrogen atom, a hydroxyl group, or $OR^4$, $R^4$ represents an alkyl group having 1 to 4 carbon atoms, $X^2$ is a hydrogen atom or $OR^5$, and $R^5$ represents an alkyl group having 1 to 4 carbon atoms.

(7) The purified cellulose fiber, in which a strength (TB) (cN/dtex) and the elongation at break (EB) (%) of the purified cellulose fiber satisfy a relationship of the following general formula (1):

$$\frac{TB}{EB^{-0.52}} \geq 13 \quad \cdots (1)$$

(8) The purified cellulose fiber, in which the strength (TB) (cN/dtex) of the purified cellulose fiber is equal to or higher than 5.1 cN/dtex.

(9) The purified cellulose fiber, in which the strength (TB) (cN/dtex) of the purified cellulose fiber is equal to or higher than 5.4 cN/dtex.

(10) The purified cellulose fiber, in which the strength (TB) (cN/dtex) and the elongation at break (EB) (%) of the purified cellulose fiber satisfy a relationship of the following general formula (2):

$$TB \times EB \leq 80 \quad \cdots (2)$$

(11) A fiber-rubber composite which is formed as a composite material with a rubber material by using the purified cellulose fiber.

(12) A tire which uses the fiber-rubber composite.

(13) The tire, in which the fiber-rubber composite is used as a carcass ply.

(14) A method of manufacturing the purified cellulose fiber, wherein the purified cellulose fiber is made by wet spinning or dry-wet spinning a cellulose-dissolved liquid made by dissolving a cellulose raw material in a liquid consisting of an ionic liquid; and the initial elastic modulus was obtained from the gradient of a tangential line of a stress-strain curve at an elongation of 0.5 to 0.7%.

According to the present invention, the purified cellulose fiber can be produced without generating toxic substances such as carbon disulfide, and thus environmental burdens can be reduced.

In addition, since the fiber-rubber composite of the present invention uses the purified cellulose fiber that is excellent in initial elastic modulus and elongation at break, the utility value thereof is high.

Moreover, since the tire of the present invention uses the fiber-rubber composite of the present invention, and thus has good tire performance.

EMBODIMENTS FOR CARRYING OUT THE INVENTION

[Purified Cellulose Fiber]

First, a purified cellulose fiber used in a fiber-rubber composite of the present invention will be described.

The properties of the purified cellulose fiber used in the present invention has an initial elastic modulus of 2.30 cN/dtex or higher in a region having an elongation of 0.5% to 0.7%.

Hereinafter, a preferable manufacturing method of the purified cellulose fiber used in the present invention will be described.

In the present invention, the purified cellulose fiber is obtained by wet spinning or dry-wet spinning a cellulose-dissolved liquid made by dissolving a cellulose raw material in a liquid consisting of an ionic liquid.

The wet spinning or dry-wet spinning method is not particularly limited, and the purified cellulose fiber may be spinned by well-known spinning methods.

In the present invention, the cellulose raw material is not particularly limited as long as it contains cellulose, and may be a cellulose raw material derived from plants, a cellulose raw material derived from animals, a cellulose raw material derived from microbes, or a regenerated cellulose raw material.

Examples of the cellulose raw material derived from plants include cellulose raw materials derived from unprocessed natural plants such as wood, cotton, linen, or other herbaceous species, and processed cellulose raw materials derived from plants which are subjected to a processing treatment in advance, such as pulp, wood powder, and paper products.

Examples of the cellulose raw material derived from animals include cellulose raw materials derived from sea squirts.

Examples of the cellulose raw material derived from microbes include cellulose raw materials produced by microbes that belong to the genera Aerobacter, Acetobacter, Achromobacter, Agrobacterium, Alacaligenes, Azotobacter, Pseudomonas, Rhizobium, and Sarcina.

Examples of the regenerated cellulose raw material include cellulose raw materials made by regenerating the cellulose raw materials derived from plants, animals, or microbes as described above using well-known methods such as the viscose method.

Particularly, as the cellulose raw material in the present invention, pulp that is appropriately dissolved in an ionic liquid is preferable.

In the present invention, before dissolving the cellulose raw material in a liquid including the ionic liquid, a pretreatment may be performed on the cellulose raw material for the purpose of enhancing solubility in the ionic liquid. As the pretreatment, specifically, a drying treatment, a physical pulverizing treatment such as pulverization or trituration, a chemical modifying treatment using an acid or an alkali, and the like may be performed. All of these may be performed by ordinary methods.

In the present invention, the ionic liquid is a liquid at 100°C or less, and is referred to as a solvent which is formed from only ions and in which cation portions, anion portions, or both thereof are formed from organic ions.

The cation portion of the ionic liquid is not particularly limited, and may use a cation portion generally used in ionic liquids.

Preferable examples of the cation portion of the ionic liquid of the present invention include a nitrogen-containing aromatic ion, an ammonium ion, and a phosphonium ion.

As the nitrogen-containing aromatic cation, specific examples thereof include a pyridinium ion, a pyridazinium ion, a pyrimidinium ion, a pyrazinium ion, an imidazolium ion, a pyrazonium ion, an oxazolium ion, a 1,2,3-triazolium ion, a 1,2,4-triazolium ion, a thiazolium ion, a piperidinium ion, and a pyrrolidinium ion.

Particularly, as the nitrogen-containing aromatic cation, the imidazolium ion and the pyrimidinium ion are preferable, and the imidazolium ion expressed by the following General Formula (C3) is more preferable.

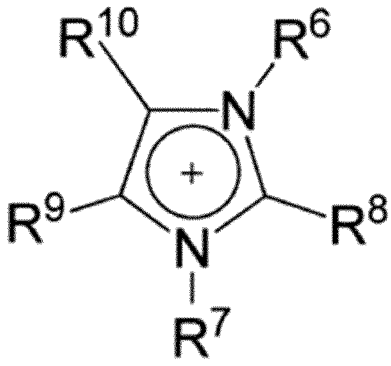

··· (C3)

In the formula, $R^6$ and $R^7$ each independently are an alkyl group having 1 to 10 carbon atoms or an alkenyl group having 2 to 10 carbon atoms, and $R^8$ to $R^{10}$ each independently are a hydrogen atom or an alkyl group having 1 to 10 carbon atoms.

In the formula (C3), $R^6$ and $R^7$ each independently are an alkyl group having 1 to 10 carbon atoms or an alkenyl group having 2 to 10 carbon atoms.

The alkyl group having 1 to 10 carbon atoms may have any of linear, branched, and cyclic types, the linear or branched type is preferable, and the linear type is more preferable.

Specific examples of the linear alkyl group include a methyl group, an ethyl group, a propyl group, a butyl group, a pentyl group, a hexyl group, a heptyl group, an octyl group, a nonyl group, and a decyl group.

Specific examples of the branched alkyl group include a 1-methylethyl group, a 1,1-dimethylethyl group, a 1-methylpropyl group, a 2-methylpropyl group, a 1,1-dimethylpropyl group, a 2,2-dimethylpropyl group, a 1-methylbutyl group, a 2-methylbutyl group, a 3-methylbutyl group, a 1-methylpentyl group, a 2-methylpentyl group, a 3-methylpentyl group, and a 4-methylpentyl group.

The cyclic alkyl group may be a monocyclic group or a polycyclic group. Specific examples thereof include a monocyclic group such as a cyclopropyl group, a cyclobutyl group, a cyclopentyl group, a cyclohexyl group, a cycloheptyl group, and a cyclooctyl group, and a polycyclic group such as a norbornyl group, an adamantyl group, and an isobornyl group.

In $R^6$ and $R^7$, the number of carbon atoms of the alkyl group is preferably 1 to 8, and more preferably 1 to 4.

As the alkenyl group having 2 to 10 carbon atoms, those obtained by substituting a single bond between carbon atoms in an alkyl group having 2 to 10 carbon atoms with a double bond may be exemplified, and preferable examples thereof include a vinyl group and an allyl group. In addition, the position of the double bond is not particularly limited.

In $R^6$ and $R^7$, the number of carbon atoms of the alkenyl group is preferably 2 to 8, and more preferably 2 to 4.

In addition, $R^6$ and $R^7$ may be the same or may be different from each other.

In the formula (C3), $R^8$ to $R^{10}$ each independently are a hydrogen atom, or an alkyl group having 1 to 10 carbon atoms.

The alkyl group having 1 to 10 carbon atoms may have any of linear, branched, and cyclic types, the linear or branched type is preferable, and the linear type is more preferable. Examples of the linear, branched, and cyclic alkyl groups include the same group as the alkyl groups of $R^5$ and $R^6$.

In $R^7$ to $R^9$, the number of carbon atoms of the alkyl group is preferably 1 to 6, and more preferably 1 to 3. However, a hydrogen atom other than the alkyl group is even more preferable.

In addition, $R^7$ to $R^9$ may be the same or may be different from each other.

Preferable and specific examples of the imidazolium ion expressed by the formula (C3) are expressed by the following formula (C1).

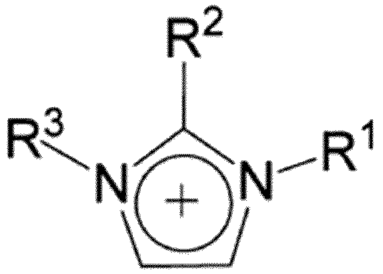

··· (C1)

In the formula, $R^1$ represents an alkyl group having 1 to 4 carbon atoms or an alkenyl group having 2 to 4 carbon atoms, $R^2$ represents a hydrogen atom or a methyl group, and $R^3$ represents an alkyl group having 1 to 8 carbon atoms or an alkenyl group having 2 to 8 carbon atoms.

In addition, preferable and specific examples of the imidazolium ion expressed by the formula (C1) are expressed by the following formulas (C1-1) to (C1-3).

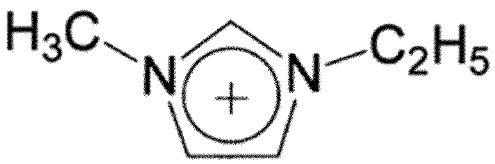

··· (C 1 − 1)

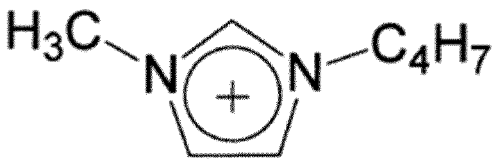

··· (C 1 − 2)

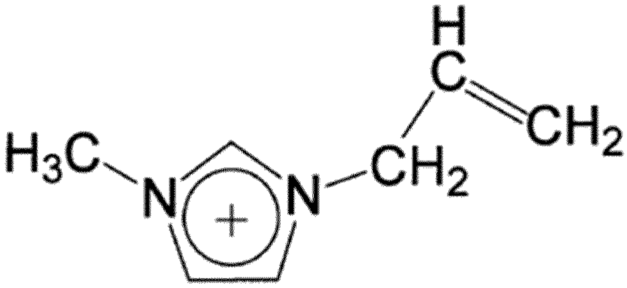

··· (C 1 − 3)

The phosphonium ion is not particularly limited as long as it has "$P^+$", and preferable and specific examples thereof include those expressed by the general formula "$R_4P^+$ (a plurality of Rs each independently are a hydrogen atom or a hydrocarbon group having 1 to 30 carbon atoms.)".

The hydrocarbon group having 1 to 30 carbon atoms may be an aliphatic hydrocarbon group or an aromatic hydrocarbon group.

As the aliphatic hydrocarbon group, a saturated hydrocarbon group (alkyl group) is preferable, and the alkyl group may have any of linear, branched, and cyclic types.

The linear alkyl group preferably has 1 to 20 carbon atoms, and more preferably has 1 to 16 carbon atoms. Specific examples of the linear alkyl group include a methyl group, an ethyl group, a propyl group, a butyl group, a pentyl group, a hexyl group, a heptyl group, an octyl group, a nonyl group, a decyl group, a undecyl group, a dodecyl group, a tridecyl group, a tetradecyl group, a pentadecyl group, and hexadecyl group.

The branched alkyl group has 3 to 30 carbon atoms, preferably has 3 to 20 carbon atoms, and more preferably has 3 to 16 carbon atoms. Specific examples of the branched alkyl group include a 1-methylethyl group, a 1,1-dimethylethyl group, a 1-methylpropyl group, a 2-methylpropyl group, a 1,1-dimethylpropyl group, a 2,2-dimethylpropyl group, a 1-methylbutyl group, a 2-methylbutyl group, a 3-methylbutyl group, a 1-methylpentyl group, a 2-methylpentyl group, a 3-methylpentyl group, and a 4-methylpentyl group.

The cyclic alkyl group has 3 to 30 carbon atoms, preferably has 3 to 20 carbon atoms, more preferably has 3 to 16 carbon atoms, and may be a monocyclic group or a polycyclic group. Specific examples of the cyclic alkyl group include a monocyclic group such as a cyclopropyl group, a cyclobutyl group, a cyclopentyl group, a cyclohexyl group, a cycloheptyl group, and a cyclooctyl group, and a polycyclic group such as a norbornyl group, an adamantyl group, and an isobornyl group.

The aromatic hydrocarbon group preferably has 6 to 30 carbon atoms. Specific examples of the aromatic hydrocarbon group include an aryl group such as a phenyl group, a 1-naphthyl group, a 2-naphthyl group, a biphenyl group, and a tolyl group, and an arylalkyl group such as a benzyl group, a phenethyl group, a naphthylmethyl group, and a naphthylethyl group.

A plurality of Rs in the general formula "$R_4P^+$" may be the same or different from each other.

Particularly, as the phosphonium cation ion, a cation portion expressed by the following formula (C4) is pref-

erable.

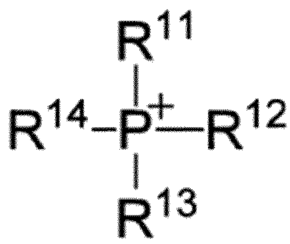

··· (C4)

In the formula, $R^{11}$ to $R^{14}$ each independently are an alkyl group having 1 to 16 carbon atoms.

In the formula (C4), $R^{11}$ to $R^{14}$ each independently are an alkyl group having 1 to 16 carbon atoms. The alkyl group having 1 to 16 carbon atoms may have any of linear, branched, and cyclic types, the linear or branched type is preferable, and the linear type is more preferable. Examples of the linear, branched, and cyclic alkyl groups include those described above.

In addition, $R^{11}$ to $R^{14}$ may be the same or may be different from each other. Particularly, in terms of easy availability, it is preferable that three or more of $R^{11}$ to $R^{14}$ be the same.

In the present invention, as the alkyl group of the $R^{11}$ to $R^{14}$, a linear or branched alkyl group having 1 to 14 carbon atoms is preferable, a linear or branched alkyl group having 1 to 10 carbon atoms is more preferable, a linear or branched alkyl group having 1 to 8 carbon atoms is even more preferable, and a linear or branched alkyl group having 1 to 4 carbon atoms is particularly preferable.

A preferable and specific example of the cation portion expressed by the formula (C4) is expressed by the following formula (C5).

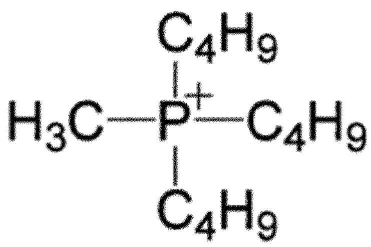

··· (C5)

In the present invention, the cation portion is more preferably one or more types selected from the group consisting of an imidazolium ion, a pyridinium ion, an ammonium ion, and a phosphonium ion.

In the present invention, examples of the anion portion include a halogen ion, a carboxylate ion, a phosphate ion, a phosphonate ion, and a phosphinate ion.

Examples of the halogen ion include a chloride ion, a bromide ion, and an iodide ion, and the chloride ion is preferable.

Examples of the carboxylate ion include a formate ion, an acetate ion, a propionate ion, a butyrate ion, a hexanoate ion, a maleate ion, a fumarate ion, an oxalate ion, a lactate ion, and a pyruvate ion. As the carboxylate ion, the formate ion, the acetate ion, and the propionate ion are preferable.

Particularly, it is preferable that the anion portion have a compound including a phosphorus atom, and any of a phosphate ion, a phosphonate ion, and a phosphinate ion expressed by the following general formula (C2) is more preferable.

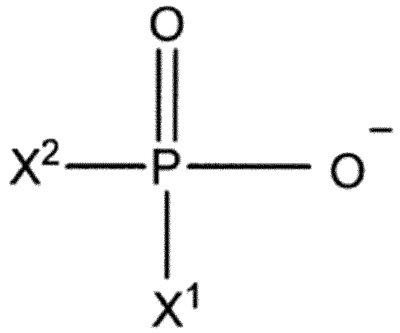

··· (C 2)

In the formula, $X^1$ and $X^2$ are independent, $X^1$ is a hydrogen atom, a hydroxyl group, or $OR^4$, $R^4$ represents an alkyl group having 1 to 4 carbon atoms, $X^2$ is a hydrogen atom or $OR^5$, and $R^5$ represents an alkyl group having 1 to 4 carbon atoms.

Examples of the phosphonate ion include ions expressed by the following general formula (A1).

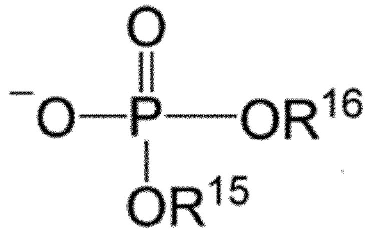

··· (A 1)

In the formula, $R^{15}$ and $R^{16}$ each independently are a hydrogen atom or an alkyl group.

In the formula (A1), $R^{15}$ and $R^{16}$ each independently are a hydrogen atom or an alkyl group, and the alkyl group may have any of linear, branched, and cyclic types. Particularly, the linear or branched alkyl group is preferable. The number of carbon atoms of the alkyl group in $R^{15}$ and $R^{16}$ is preferably 1 to 10, more preferably 1 to 6, and even more preferably 1 to 4. In addition, for the industrial reason, an alkyl group having 1 or 2 carbon atoms is particularly preferable. $R^{15}$ and $R^{16}$ may be the same or different from each other.

Among the phosphonate ions, a dimethyl phosphonate ion and a diethyl phosphonate ion are preferable.

Examples of the phosphinate ion include ions expressed by the following general formula (A2).

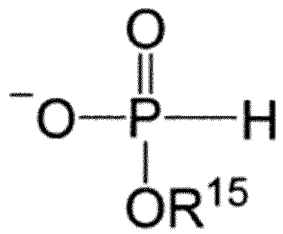

··· (A 2)

In the formula, $R^{15}$ is as described above.

In the formula (A2), $R^{15}$ is the same as $R^{15}$ in the formula (A1).

Among the phosphinate ions, a methyl phosphinate ion is preferable.

The phosphate ion is expressed by the following general formula (A3).

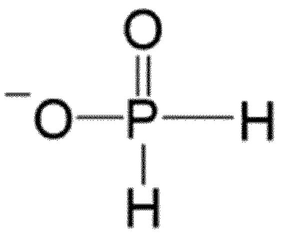

··· (A3)

In addition, other anion portions include pseudohalogen ions. The pseudohalogen ion has similar properties to those of halogen ions. Examples of the pseudohalogen ion include a cyanate ion, an oxocyanate ion, a thiocyanate ion, and a selenocyanate ion.

In the present invention, it is preferable that the anion portion be formed from a compound including phosphorus described above. In addition, as the compound including phosphorus as the anion portion, a phosphate ion, a phosphonate ion, and a phosphinate ion are particularly preferable.

An ionic liquid that contains the compound including phosphorus as the anion portion has low viscosity and melting point compared to a case where the anion portion is a halogen ion. Therefore, a purified cellulose fiber using the ionic liquid is superior in terms of being easily spinned.

In addition, the ionic liquid that contains the compound including phosphorus as the anion portion is less likely to reduce the molecular weight of a fiber and has high heat resistance (that is, is less likely to be pyrolyzed at a high temperature) compared to a case where the anion portion is a carboxylate ion. Therefore, when the purified cellulose fiber using the ionic liquid is spinned, the spinning temperature can be set to be high. As a result, the productivity of the purified cellulose fiber at a higher spinning temperature can be ensured. For example, in the case where the anion portion is carboxylate, under the condition in which the spinning temperature is equal to or higher than 130°C, productivity in spinning purified cellulose is reduced. However, in the case where the anion portion is the compound containing phosphorus, even under the high heat condition in which the spinning temperature is 150°C, productivity in spinning purified cellulose can be maintained.

Moreover, in a case where the ionic liquid is reused, the yield of the reuse is high. Therefore, increases in the amount of the ionic liquid needed to continuously produce the purified cellulose fiber, and materials and energy needed to produce the ionic liquid can be prevented.

The ionic liquid in the present invention is formed from the cation portion and the anion portion described above. The combination of the cation portion and the anion portion is not particularly limited, and may be appropriately selected to appropriately dissolve a cellulose raw material.

As the ionic liquid in the present invention, 1-butyl-3-methylimidazolium acetate (C4AmimAc), 1-ethyl-3-methylimidazolium acetate (C2AmimAc), 1-allyl-3-methylimidazolium chloride (AminCl), and 1-ethyl-3-methylimidazolium diethylphosphate (C2mimDEP) are preferable. In addition, as the ionic liquid in the present invention, 1-ethyl-3-methylimidazolium methylphosphonate (C2mimMEP) and 1-ethyl-3-methylimidazolium phosphinate (C2mimHPO) are more preferable.

In the case where the above-mentioned ionic liquid is used, compared to a case where, for example, 1-butyl-3-imidazolium chloride is used as the ionic liquid, reduction in the molecular weight of the fiber can be prevented.

It is preferable that the viscosity of the ionic liquid be low. In a case where an ionic liquid having a high viscosity is used, it becomes difficult to dissolve the cellulose raw material in the ionic liquid. In a case where dissolving the cellulose raw material is difficult, a large amount of the undissolved and remained cellulose raw material is generated, and thus clogging of a filter occurs during spinning. As a result, productivity is reduced. In addition, when the undissolved and remained cellulose raw material is incorporated in the fiber, they become the fracture nucleus of the fiber. As a result, the quality of the fiber is degraded. On the other hand, in the case where the ionic liquid having a low viscosity is used, when the cellulose raw material is dissolved in the ionic liquid, the cellulose raw material appropriately permeates into the ionic liquid. Therefore, cellulose can be easily dissolved in the ionic liquid.

In the present invention, a method of dissolving the cellulose raw material in the liquid that contains the ionic liquid is not particularly limited, and for example, a cellulose-dissolved liquid can be obtained by causing the liquid that consists of the ionic liquid to come into contact with the cellulose raw material, and heating or stirring the resultant as necessary.

The method of causing the liquid that consists of the ionic liquid to come into contact with the cellulose raw material is not particularly limited, and for example, the cellulose raw material may be added to the liquid that consists of the ionic liquid or the liquid that consists of the ionic liquid may be added to the cellulose raw material.

In a case where heating is performed during dissolving, the heating temperature is preferably 30°C to 200°C, more preferably 70°C to 180°C, and even more preferably 80°C to 150°C. By performing heating, the solubility of the cellulose raw material is further enhanced.

The stirring method is not particularly limited, and the liquid that consists of the ionic liquid and the cellulose raw material may be mechanically stirred using a stirrer, a stirring blade, a stirring rod, or the like, or the liquid that consists of the ionic liquid and the cellulose raw material may be sealed in an airtight container and stirred by shaking the container. The stirring time is not particularly limited, and it is preferable that stirring be performed until the cellulose raw material is appropriately dissolved. Otherwise, the liquid that consists of the ionic liquid and the cellulose raw material may be dissolved by an extruder having a single shaft or a plurality of shafts, a kneader, or the like.

By using the cellulose-dissolved liquid obtained by the above method, a purified cellulose fiber can be spinned by the well-known spinning methods such as the dry-wet spinning or wet spinning mentioned above.

The purified cellulose fiber obtained by the above method has an initial elastic modulus of 2.30 cN/dtex or higher in a region having an elongation of 0.5% to 0.7% and the strength (TB) (cN/dtex) of the purified cellulose fiber is equal to or higher than 3.9 and equal to or less than 8.2 cN/dtex.

Regarding the purified cellulose fiber obtained by the above method, the relationship between the strength TB (cN/dtex) and the elongation at break EB (%) at 25°C satisfies the following formulas (1) and (2), and a strength holding ratio (HT/TB) assuming that the strength is HT (cN/dtex) at 150°C is 70 to 100 (%).

$$\frac{TB}{EB^{-0.52}} \geq 13 \quad \cdots (1)$$

$$TB \times EB \leq 80 \quad \cdots (2)$$

The strength (TB) is more preferably 5.1 cN/dtex or higher, and even more preferably 5.4 cN/dtex or higher.

The breaking strength (EB) is preferably in a range of 10% to 30%, more preferably in a range of 10% to 25%, and even more preferably 10% to 20%.

The initial elastic modulus is preferably in a range of 2.30 cN/dtex to 8.0 cN/dtex, more preferably in a range of 2.30 cN/dtex to 6.0 cN/dtex, and even more preferably in a range of 2.30 cN/dtex to 5.0 cN/dtex. In a case where the initial elastic modulus is below the above ranges, steering stability and cut resistance are degraded. In a case where the initial elastic modulus is above the above ranges, molding a tire using the purified cellulose is difficult, which has an adverse effect on the vibration characteristics of the tire. In addition, there is an adverse effect that results in bad ride quality for a person who rides in the car.

By using the fiber-rubber composite of the present invention which uses the purified cellulose fiber that is excellent in initial elastic modulus and elongation at break for a carcass ply, a belt ply, or a belt protecting layer, a tire having high performance can be obtained. Particularly, it is preferable that the fiber-rubber composite of the present invention be used for a carcass ply. Accordingly, a tire having excellent steering stability can be obtained.

In addition, the fiber-rubber composite may be used for at least one of the carcass ply, the belt ply, and the belt protecting layer. However, the fiber-rubber composite may also be used for all the carcass ply, the belt ply, and the belt protecting layer.

A cord produced from the cellulose fiber employs a single twisted structure having a single twisted filament bundle, or a double twisted structure made by finally twisting a plurality of lines of primarily twisted filament bundles. The fineness per single cord is preferably 1400 to 6000 dtex, and more preferably 1400 to 4000 dtex. When a cord having a fineness of less than 1400 dtex is used, the number of carcasses needs to be increased in order to maintain tire strength, resulting in increase in tire weight. In a case where a cord having a fineness of higher than 6000 dtex is used, the thickness of the carcass layer is unnecessarily increased, resulting in an increase in tire weight.

The twisting coefficient of the cord is preferably 0.30 to 0.80, and more preferably 0.50 to 0.70.

The twisting coefficient tanθ is obtained by following formula (3).

$$\tan\theta = T\sqrt{0.125 \times \frac{D}{\rho} \times 10^{-3}} \quad \cdots (3)$$

D: total decitex value
P: cord specific gravity
T: the number of twists (twists/cm)

The cord is dipped into a general adhesive such as RFL (resolcin-formalin-latex) to be subjected to a dipping treatment, and is subjected to heat treatments including a drying process and a baking process. The dipped cord produced by the above method is topped with a coating rubber, thereby producing a fiber-rubber composite.

As a rubber composition used in the fiber-rubber composite of the present invention, for example, a natural rubber (NR) and a synthetic rubber having a carbon-carbon double bond may be singly or in a combination of two or more thereof.

Examples of the synthetic rubber include: a polyisoprene rubber (IR), a polybutadiene rubber (BR), a polychloroprene rubber, and the like which are homopolymers of a conjugated diene compound such as isoprene, butadiene, and chloroprene; a styrene-butadiene copolymer rubber (SBR), a vinylpyridine-butadiene-styrene copolymer rubber, an acrylonitrile-butadiene copolymer rubber, an acrylic acid-butadiene copolymer rubber, a methacrylic acid-butadiene copolymer rubber, a methyl acrylate-butadiene copolymer rubber, a methyl methacrylate-butadiene copolymer rubber, and the like which are copolymers of the conjugated diene compound and a vinyl compound such as styrene, acrylonitrile, vinylpyridine, acrylic acid, methacrylic acid, alkyl acrylates, and alkyl methacrylates; copolymers (for example, an isobutylene-isoprene copolymer rubber (IIR)) of olefins such as ethylene, propylene, and isobutylene and a diene compound; copolymers (EPDM) (for example, an ethylene-propylene-cyclopentadiene ternary copolymer, an ethylene-propylene-5-ethylidene-2-norbornene ternary copolymer, and an ethylene-propylene-1,4-hexadiene ternary copolymer) of olefins and unconjugated dienes; and halides of the above various rubbers, for example, a chlorinated isobutylene-isoprene copolymer rubber (Cl-IIR), a brominated isobutylene-isoprene copolymer rubber (Br-IIR), and a ring-opening polymer of norbornene.

The above synthetic rubbers may be blended with a saturated elastic body such as a polyalkenamer (for example, polypentenamer) obtained by ring-opening polymerization of a cycloolefin, a rubber (for example, a polyepichlorohydrin rubber which can be subjected to sulfur vulcanization) obtained by ring-opening polymerization of an oxirane ring, or a polypropylene oxide rubber.

In the rubber composition used in the present invention, sulfur, organic sulfur compounds, and other cross-linking agents may be blended at a ratio of preferably 0.01 to 10 parts by mass, and more preferably 1 to 5 parts by mass with respect to 100 parts by mass of the rubber component. In addition, in the rubber composition, a vulcanization accelerator may be blended at a ratio of preferably 0.01 to 10 parts by mass, and more preferably 0.5 to 5 parts by mass with respect to 100 parts by mass of the rubber component. In this case, the type of the vulcanization accelerator is not limited, but by using dibenzothiazyl sulfide (DM), diphenylguanidine (D), and the like, the vulcanizing time can be shortened.

In addition, the rubber composition used in the present invention may be blended with, for example, oils such as mineral oils including paraffin-based, naphthene-based, and aromatic process oils, a co-oligomer of ethylene-$\alpha$-olefin, paraffin wax, and liquid paraffin, and vegetable oils including castor oil, cottonseed oil, linseed oil, rapeseed oil, soybean oil, palm oil, coconut oil, and peanut oil.

Moreover, blending agents used in typical rubber industries such as fillers including carbon black, silica, calcium carbonate, calcium sulfate, clay, and mica; vulcanization accelerator assistants including zinc oxide and stearic acid; and antioxidants may be added to the rubber composition used in the present invention according to routine methods depending on the purposes and applications.

The tire of the present invention can be manufactured by performing typical molding and vulcanization processes using the fiber-rubber composite of the present invention.

Examples

Next, the present invention will be described in more detail by showing Examples, but the present invention is not limited to the following Examples.

[Production of Multifilament]

A cellulose-dissolved liquid in which pulp is dissolved in 1-butyl-3-methylimidazolium acetate (C4AmimAc), 1-ethyl-3-methylimidazolium acetate (C2AmimAc), 1-allyl-3-methylimidazolium chloride (AminCl), 1-ethyl-3-methylimidazolium diethylphosphate (C2mimDEP), 1-ethyl-3-methylimidazolium methylphosphonate (C2mimMEP), 1-ethyl-3-methylimidazolium phosphinate (C2mimHPO), or N-methylmorpholine N-oxide (NMMO) was heated to a spinning temperature. Thereafter, the heated solution was extruded in a coagulating bath by an extruder and was subjected to washing and drying processes, thereby obtaining multifilaments of Examples 1 to 23 and Comparative Examples 1 to 6 shown in Tables 1 to 4.

The properties of the multifilament (fiber) in each of the Examples and the Comparative Examples were measured by the following test methods, and the results are shown in Tables 1 to 4. In addition, in the item regarding "Productivity" of Tables 1 to 4, symbol O indicates that the amount of fiber for producing a tire can be produced, and

symbol X indicates that it is difficult to produce the amount of fiber for producing a tire.

(1) Fineness Evaluation

100 m of the fiber was taken, dried at 130°C for 30 minutes, and was left in a dry desiccator to cool until the temperature becomes the room temperature. Thereafter, the weight thereof was measured. Since 1 g per 10,000 m becomes 1 dtex, the fineness was calculated from the weight of 100 m of the fiber.

(2) Method of Measuring Initial Elastic Modulus and Elongation at Break

A fiber that was false-twisted four times per 10 cm was subjected to a tensile test using a tensile tester under the conditions of 25°C and 55%RH. The elongation at break is an elongation at the time of breaking, and the initial elastic modulus was obtained from the gradient of a tangential line of a stress-strain curve at an elongation of 0.5 to 0.7%. In addition, although the unit of initial elastic modulus is [cN/dtex.%], the unit of initial elastic modulus in the present invention was defined as the notation [cN/dtex].

[Production of Cord]

After the obtained multifilament is primarily twisted, two pieces of the multifilament were combined and finally twisted, thereby producing a cord.

[Production of Dipped Cord]

The cord was dipped in the RFL (resolcin-formalin-latex) adhesive to be subjected to a dipping treatment, and was subjected to heat treatments including a drying process and a baking process. The drying process was performed under the conditions of 150°C×150 seconds and a tension of $1\times10^{-3}$ N/dtex. The baking process was performed after the drying process under the conditions of the same temperature, same time, and same tension as those of the drying process. As a result, a dipped cord was produced.

[Production of Carcass Ply Material]

By calendering the dipped cord with a coating rubber, a carcass ply material was produced.

[Production of Tire]

Using the dipped cord topped with the coating rubber, typical molding and vulcanization processes were performed, thereby producing a tire 225/45R17.

(1) Steering Stability

The tire in each of the Examples and the Comparative Examples was mounted in a car, a real car feeling test was performed at a speed of 60 to 200 km/h. The items including (i) straight-running stability, (ii) turning stability, (iii) feeling of rigidity, (iv) handling, and the like were graded 1 to 10 points, and the points of each of the items were averaged to measure the steering stability.

In addition, the evaluation was performed by two expert drivers, the grades of the two drivers were averaged to index a control tire of the Comparative Example 1 as 100. A larger index indicates good steering stability.

(2) Side Plunger Index

The tire was rim-assembled at a pneumatic pressure of 2.0 kgf/cm$^2$, and was fixed to a tester under the unloaded condition. In addition, a plunger pin having a hemispherical surface (diameter: 19 mm) at the tip end was pressed to reach the maximum width position of a tire side portion under the condition of 50±2.5 mm/min. At this time, a plunger energy (PE) was calculated by the following formula (4) from a plunger movement amount Y(cm) until a plunger comes into contact with the tire and is broken, and a plunger pressing force F (kg) at break of the tire, and the control tire of the Comparative Example 1 was indexed as 100.

$$PE = 1/2 \cdot Y \cdot F \ (kg \cdot cm) \quad \cdots (4)$$

(3) Side Cut Resistance Index (As)

The tire was mounted to a vehicle, and was caused to ride on a vertically steep curbstone having a height of 120 mm and a radius of curvature at the corner of 20 mm under the condition of a speed of 15 km/h in a direction in which the approach angle is 15 degrees. The same test was performed on the same test tire while reducing the internal pressure from 3 $kg/cm^2$ by 0.1 $kg/cm^2$, and an internal pressure p ($kg/cm^2$) at which the side portion has a cur burst was obtained. At the internal pressure p or less, the side portion is likely to be bent, and cut bursts occur in all the cases. Therefore, it was determined that the side cut resistance was good as the internal pressure p was reduced, whereas cut bursts had easily occurred and the side cut resistance was poor as the internal pressure p was increased. When it is assumed that the internal pressure of the tire of the Comparative Examples 1 was $p_0$ and the internal pressure of the test tire with respect to the internal pressure $p_0$ was $p_1$, the side cut resistance index (As) can be expressed as the formula $As=p_0 \div p_1 \times 100$. The above test was performed on each of the three same tires, and on the basis of the average internal pressure p of the three values, the side cut resistance index (As) was obtained.

As can be seen from Tables 1 to 4, in the Examples 1 to 23, the balance between the initial elastic modulus and the elongation at break of the purified cellulose fiber used was good, and consequently, good tire performance was obtained.

On the other hand, in the Comparative Example 1, the elongation at break of the purified cellulose fiber used was low, and the energy until the cord was cut was low, so that good tire performance could not be obtained. In the Comparative Example 2, the initial elastic modulus of the purified cellulose fiber used was low, and good tire performance was not obtained. In the Comparative Examples 3 to 6, stability (productivity) to such a degree that the amount of fiber at which a fiber-rubber composite can be produced was produced could not be obtained, and the fiber-rubber composite and a tire using this could not be produced.

[Table 1]

| | Example 1 | Example 2 | Example 3 | Example 4 | Example 5 | Example 6 | Example 7 | Example 8 |
|---|---|---|---|---|---|---|---|---|
| Solvent | C4mimAc | C2mimAc | AmimCl | C2mimDEP | C2mimDEP | C2mimDEP | C2mimDEP | C2mimDEP |
| Cellulose concentration [wt%] | 10 | 15 | 12.5 | 13.8 | 8 | 14.3 | 15.7 | 15.0 |
| Air-gap [mm] | 60 | 67 | 63 | 55 | 70 | 54 | 84 | 89 |
| Coagulating bath | Water | Water | Water | Water | Water | Water | Water | Water |
| Spinning Temperature [°C] | 110 | 110 | 120 | 130 | 140 | 130 | 140 | 140 |
| Strength [cN/dtex] | 5.3 | 5.1 | 5.5 | 4.6 | 4.9 | 5.1 | 5.7 | 5.5 |
| Elongation at break [%] | 10.5 | 12.9 | 10.1 | 13.4 | 7.9 | 6.2 | 5.1 | 14.3 |
| $TB/EB^{-0.52}$ | 18.0 | 19.3 | 18.3 | 17.7 | 14.4 | 13.2 | 13.3 | 21.9 |
| $TB \times EB$ | 55.7 | 65.8 | 55.6 | 61.6 | 38.7 | 31.6 | 29.1 | 78.7 |
| Initial elastic modulus | 2.74 | 2.45 | 2.83 | 2.31 | 3.74 | 4.57 | 4.98 | 2.32 |
| Fineness [dtex] | 1842 | 1856 | 1847 | 1798 | 1837 | 1866 | 1812 | 1843 |
| Structure | 1840 dtex/2 | 1840 dtex/2 | 1840 dtex/2 | 1840 dtex/2 | 1840 dtex/2 | 1840 dtex/2 | 1840 dtex/2 | 1840 dtex/2 |
| Number of primary twists [twists/10 cm] | 47 | 47 | 47 | 47 | 47 | 47 | 47 | 47 |
| Number of final twists [twists/10 cm] | 47 | 47 | 47 | 47 | 47 | 47 | 47 | 47 |
| Steering stability [index] | 107 | 105 | 110 | 102 | 116 | 125 | 124 | 101 |
| Plunger energy [index] | 190 | 230 | 190 | 190 | 140 | 110 | 100 | 170 |
| Side cut resistance [index] | 180 | 190 | 170 | 160 | 130 | 105 | 100 | 190 |
| Productivity | O | O | O | O | O | O | O | O |

* Regarding productivity, O indicates that the amount of fiber at which a tire can be produced can be produced, and X indicates that it is difficult to produce the amount of fiber at which a tire can be produced.
* Abbreviations of solvents are shown as follows:
C4mimAc: 1-butyl-3-methylimidazolium acetate
C2mimAc: 1-ethyl-3-methylimidazolium acetate
AmimCl: 1-allyl-3-methylimidazolium chloride
C2mimDEP: 1-ethyl-3-methylimidazolium diethylphosphate
C2mimMEP: 1-ethyl-3-methylimidazolium methylphosphonate
C2mimHPO: 1-ethyl-3-methylimidazolium phosphinate
NMMP: N-methylmorpholine N-oxide

[Table 2]

| | Example 9 | Example 10 | Example 11 | Example 12 | Example 13 | Example 14 | Example 15 | Example 16 |
|---|---|---|---|---|---|---|---|---|
| Solvent | C2mimDEP | C2mimDEP | C2mimDEP | C2mimDEP | C2mimDEP | C2mimHPO | C2mimDEP | C2mimDEP |
| Cellulose concentration [wt%] | 12.4 | 12.8 | 13.4 | 13.2 | 16.5 | 16.8 | 14.2 | 15.8 |
| Air-gap [mm] | 52 | 49 | 69 | 65 | 60 | 59 | 73 | 67 |
| Coagulating bath | Water | Water | Water | Water | Water | Water | Water | Water |
| Spinning Temperature [°C] | 140 | 140 | 140 | 140 | 130 | 140 | 140 | 130 |
| Strength [cN/dtex] | 6.8 | 5.4 | 3.9 | 8.2 | 6.1 | 4.7 | 7.8 | 7.9 |
| Elongation at break [%] | 10.2 | 13.4 | 10.2 | 9.4 | 12.7 | 7.4 | 10.0 | 7.2 |
| $TB/EB^{-0.52}$ | 22.7 | 20.8 | 13.0 | 26.3 | 22.9 | 13.3 | 25.8 | 22.1 |
| $TB \times EB$ | 69.4 | 72.4 | 39.8 | 77.1 | 77.5 | 34.8 | 78.0 | 56.9 |
| Initial elastic modulus | 2.96 | 2.35 | 2.87 | 3.17 | 2.34 | 3.97 | 3.03 | 4.08 |
| Fineness [dtex] | 1807 | 1831 | 1851 | 1874 | 1803 | 1844 | 1842 | 1889 |
| Structure | 1840 dtex/2 | 1840 dtex/2 | 1840 dtex/2 | 1840 dtex/2 | 1840 dtex/2 | 1840 dtex/2 | 1840 dtex/2 | 1840 dtex/2 |
| Number of primary twists [twists/10 cm] | 47 | 47 | 47 | 47 | 47 | 47 | 47 | 47 |
| Number of final twists [twists/10 cm] | 47 | 47 | 47 | 47 | 47 | 47 | 47 | 47 |
| Steering stability [index] | 106 | 102 | 106 | 107 | 103 | 117 | 108 | 119 |
| Plunger energy [index] | 190 | 190 | 120 | 190 | 170 | 120 | 180 | 190 |
| Side cut resistance [index] | 180 | 190 | 160 | 150 | 190 | 130 | 140 | 110 |
| Productivity | O | O | O | O | O | O | O | O |

[Table 3]

| | Example 17 | Example 18 | Example 19 | Example 20 | Example 21 | Example 22 | Example 23 |
|---|---|---|---|---|---|---|---|
| Solvent | C2mimDEP | C2mimDEP | C2mimMEP | C2mimMEP | C2mimDEP | C2mimMEP | C2mimDEP |
| Cellulose concentration [wt%] | 15.8 | 13.6 | 16.7 | 13.0 | 14.4 | 15.0 | 13.7 |
| Air-gap [mm] | 67 | 68 | 58 | 55 | 59 | 61 | 46 |
| Coagulating bath | Water | Water | Water | Water | Water | Water | Water |
| Spinning Temperature [°C] | 140 | 140 | 140 | 140 | 130 | 140 | 140 |
| Strength [cN/dtex] | 5.4 | 5.2 | 4.2 | 5.1 | 5.4 | 5.5 | 7.4 |
| Elongation at break [%] | 11.9 | 15.1 | 17.4 | 10.0 | 11.7 | 10.5 | 10.6 |
| $TB/EB^{-0.52}$ | 19.6 | 21.3 | 18.5 | 16.9 | 19.4 | 18.7 | 25.3 |
| TB×EB | 64.3 | 78.5 | 73.1 | 51.0 | 63.2 | 57.8 | 78.4 |
| Initial elastic modulus | 2.53 | 2.31 | 2.30 | 2.94 | 2.47 | 2.83 | 2.78 |
| Fineness [dtex] | 1865 | 1891 | 1808 | 1812 | 1890 | 1792 | 1872 |
| Structure | 1840 dtex/2 | 1840 dtex/2 | 1840 dtex/2 | 1840 dtex/2 | 1840 dtex/2 | 1840 dtex/2 | 1840 dtex/2 |
| Number of primary twists [twists/10 cm] | 47 | 47 | 47 | 47 | 47 | 47 | 47 |
| Number of final twists [twists/10 cm] | 47 | 47 | 47 | 47 | 47 | 47 | 47 |
| Steering stability [index] | 104 | 102 | 102 | 109 | 104 | 109 | 108 |
| Plunger energy [index] | 170 | 190 | 190 | 170 | 180 | 180 | 190 |
| Side cut resistance [index] | 190 | 160 | 170 | 170 | 180 | 170 | 180 |
| Productivity | O | O | O | O | O | O | O |

[Table 4]

| | Comparative Example 1 | Comparative Example 2 | Comparative Example 3 | Comparative Example 4 | Comparative Example 5 | Comparative Example 6 |
|---|---|---|---|---|---|---|
| Solvent | NMMO | NMMO | C2mimAc | C2mimDEP | C2mimMEP | C2mimDEP |
| Cellulose concentration [wt%] | 10 | 13.5 | 16.2 | 18.4 | 17.7 | 17.7 |
| Air-gap [mm] | 73 | 26 | 71 | 78 | 64 | 64 |
| Coagulating bath | Water | Water | Water | Water | Water | Water |
| Spinning Temperature [°C] | 100 | 90 | 150 | 90 | 160 | 170 |
| Strength [cN/dtex] | 5.0 | 3.3 | 9.2 | 6.6 | 6.6 | 6 |
| Elongation at break [%] | 5.8 | 13.2 | 8.8 | 3.4 | 12.4 | 13.5 |
| $TB/EB^{-0.52}$ | 12.5 | 12.6 | 28.5 | 12.5 | 24.4 | 23.2 |
| TB×EB | 29.0 | 43.6 | 81.0 | 22.4 | 81.8 | 81.0 |
| Initial elastic modulus | 2.25 | 1.35 | 2.29 | 2.28 | 2.26 | 2.15 |
| Fineness [dtex] | 1863 | 1861 | 1728 | 1842 | 1842 | 1867 |
| Structure | 1840 dtex/2 | 1840 dtex/2 | 1840 dtex/2 | 1840 dtex/2 | 1840 dtex/2 | 1840 dtex/2 |
| Number of primary twists [twists/10 cm] | 47 | 47 | 47 | 47 | 47 | 47 |
| Number of final twists [twists/10 cm] | 47 | 47 | 47 | 47 | 47 | 47 |
| Steering stability [index] | 100 | 89 | - | 100 | - | - |
| Plunger energy [index] | 100 | 100 | - | 70 | - | - |
| Side cut resistance [index] | 100 | 100 | - | 60 | - | - |
| Productivity | O | O | X | X | X | X |

INDUSTRIAL APPLICABILITY

According to the present invention, the purified cellulose fiber can be produced without generating toxic substances such as carbon disulfide. Therefore, environmental burdens can be reduced. In addition, the purified cellulose fiber that is excellent in initial elastic modulus and elongation at break is used in the fiber-rubber composite of the present invention. Therefore, the utility value thereof is high. Moreover, the fiber-rubber composite of the present invention is used in the tire of the present invention. Therefore, good tire performance is provided.

## Claims

1. A purified cellulose fiber which has an initial elastic modulus of 2.30 cN/dtex or higher in a region having an elongation of 0.5% to 0.7%,
wherein the purified cellulose fiber is made by wet spinning or dry-wet spinning a cellulose-dissolved liquid made by dissolving a cellulose raw material in a liquid consisting of an ionic liquid; and
the initial elastic modulus was obtained from the gradient of a tangential line of a stress-strain curve at an elongation of 0.5 to 0.7%, wherein the strength (TB) (cN/dtex) of the purified cellulose fiber is equal to or higher than 3.9 and equal to or less than 8.2 cN/dtex.

2. The purified cellulose fiber according to claim 1,
wherein an elongation at break (EB) (%) of the purified cellulose fiber is 10.0% or more,
wherein the elongation at break is an elongation at the time of breaking of a fiber that was false-twisted four times per 10 cm and was subjected to a tensile test using a tensile tester under the conditions of 25°C and 55%RH.

3. The purified cellulose fiber according to claim 1 or 2,
wherein the ionic liquid includes a cation portion and an anion portion, and
the cation portion is one selected from the group consisting of an imidazolium ion, a pyridinium ion, an ammonium ion, and a phosphonium ion.

4. The purified cellulose fiber according to claim 3,
wherein the cation portion is an imidazolium ion expressed by the following general formula (C1):

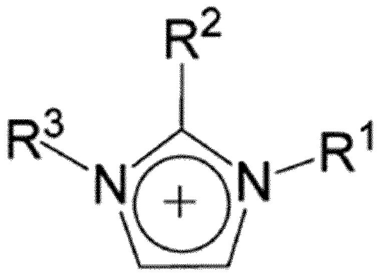

··· (C 1)

wherein in the formula, $R^1$ represents an alkyl group having 1 to 4 carbon atoms or an alkenyl group having 2 to 4 carbon atoms, $R^2$ represents a hydrogen atom or a methyl group, and $R^3$ represents one of an alkyl group having 1 to 8 carbon atoms and an alkenyl group having 2 to 8 carbon atoms.

5. The purified cellulose fiber according to claim 3,
wherein the anion portion is formed from a compound including phosphorus.

6. The purified cellulose fiber according to claim 5,
wherein the compound including phosphorus of the anion portion is any of a phosphate ion, a phosphonate ion, and a phosphinate ion expressed by the following general formula (C2):

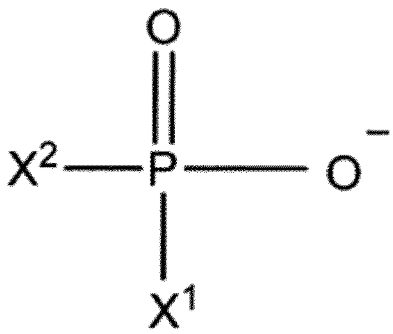

··· (C 2)

wherein in the formula, $X^1$ and $X^2$ are independent, $X^1$ is a hydrogen atom, a hydroxyl group, or $OR^4$, $R^4$ represents

an alkyl group having 1 to 4 carbon atoms, $X^2$ is a hydrogen atom or $OR^5$, and $R^5$ represents an alkyl group having 1 to 4 carbon atoms.

7. The purified cellulose fiber according to any one of claims 1 to 6,
wherein a strength (TB) (cN/dtex) and the elongation at break (EB) (%) of the purified cellulose fiber satisfy a relationship of the following general formula (1):

$$\frac{TB}{EB^{-0.52}} \geq 13 \quad \cdots (1)$$

8. The purified cellulose fiber according to any one of claims 1 to 7,
wherein the strength (TB) (cN/dtex) of the purified cellulose fiber is equal to or higher than 5.1 cN/dtex.

9. The purified cellulose fiber according to any one of claims 1 to 8,
wherein the strength (TB) (cN/dtex) of the purified cellulose fiber is equal to or higher than 5.4 cN/dtex.

10. The purified cellulose fiber according to any one of claims 1 to 8,
wherein the strength (TB) (cN/dtex) and the elongation at break (EB) (%) of the purified cellulose fiber satisfy a relationship of the following general formula (2):

$$TB \times EB \leq 80 \quad \cdots (2)$$

11. A fiber-rubber composite which is formed as a composite material with a rubber material by using the purified cellulose fiber according to any one of claims 1 to 10.

12. A tire which uses the fiber-rubber composite according to claim 11.

13. The tire according to claim 12,
wherein the fiber-rubber composite is used as a carcass ply.

14. A method of manufacturing a purified cellulose fiber according to claim 1, wherein the purified cellulose fiber is made by wet spinning or dry-wet spinning a cellulose-dissolved liquid made by dissolving a cellulose raw material in a liquid consisting of an ionic liquid.

**Patentansprüche**

1. Gereinigte Zellulosefaser, die einen anfänglichen Elastizitätsmodul von 2,30 cN/dtex oder höher in einem Bereich mit einer Dehnung von 0,5 % bis 0,7 % aufweist,
wobei die gereinigte Zellulosefaser durch Nassspinnen oder Trocken-Nassspinnen einer zelluloseaufgelösten Flüssigkeit hergestellt wird, die durch Auflösen eines Zelluloserohmaterials in einer Flüssigkeit, die aus einer ionischen Flüssigkeit besteht, hergestellt wird; und
der anfängliche Elastizitätsmodul vom Gradienten einer Tangentiallinie einer Spannungsdehnungskennlinie bei einer Dehnung von 0,5 bis 0,7 % erhalten wurde, wobei die Festigkeit (TB) (cN/dtex) der gereinigten Zellulosefaser gleich oder höher ist als 3,9 und gleich oder niedriger ist als 8,2 cN/dtex.

2. Gereinigte Zellulosefaser nach Anspruch 1,
wobei eine Bruchdehnung (EB) (%) der gereinigten Zellulosefaser 10,0 % oder mehr beträgt,
wobei die Bruchdehnung eine Dehnung zur Zeit des Brechens einer Faser ist, die pro 10 cm vier Mal falsch gezwirnt wurde und die einer Zugfestigkeitsprüfung unter Verwendung eines Zugfestigkeitsprüfers unter den Bedingungen von 25 °C und 55 % RH unterzogen wurde.

3. Gereinigte Zellulosefaser nach Anspruch 1 oder 2,

wobei die ionische Flüssigkeit einen Kationenteil und einen Anionenteil beinhaltet und der Kationenteil einer ist, der aus der Gruppe bestehend aus einem Imidazoliumion, einem Pyridiniumion, einem Ammoniumion und einem Phosphoniumion ausgewählt wurde.

4. Gereinigte Zellulosefaser nach Anspruch 3,
wobei der Kationenteil ein Imidazoliumion ist, das durch die folgende allgemeine Formel (C1) ausgedrückt wird:

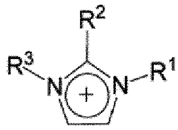

··· (C 1)

wobei in der Formel $R^1$ eine Alkylgruppe mit 1 bis 4 Kohlenstoffatomen oder eine Alkenylgruppe mit 2 bis 4 Kohlenstoffatomen repräsentiert, $R^2$ ein Wasserstoffatom oder eine Methylgruppe repräsentiert und $R^3$ eines von einer Alkylgruppe mit 1 bis 8 Kohlenstoffatomen und einer Alkenylgruppe mit 2 bis 8 Kohlenstoffatomen repräsentiert.

5. Gereinigte Zellulosefaser nach Anspruch 3,
wobei der Anionenteil aus einer Verbindung gebildet ist, die Phosphor beinhaltet.

6. Gereinigte Zellulosefaser nach Anspruch 5,
wobei die Verbindung, die Phosphor beinhaltet, des Anionenteils eines von einem Phosphation, einem Phosphonation und einem Phosphination ist, das durch die folgende allgemeine Formel (C2) ausgedrückt wird:

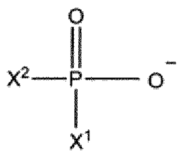

··· (C 2)

wobei in der Formel $X^1$ und $X^2$ unabhängig sind, $X^1$ ein Wasserstoffatom, eine Hydroxylgruppe oder $OR^4$ ist, $R^4$ eine Alkylgruppe mit 1 bis 4 Kohlenstoffatomen repräsentiert, $X^2$ ein Wasserstoffatom oder $OR^5$ ist und $R^5$ eine Alkylgruppe mit 1 bis 4 Kohlenstoffatomen repräsentiert.

7. Gereinigte Zellulosefaser nach einem der Ansprüche 1 bis 6,
wobei eine Festigkeit (TB) (cN/dtex) und die Bruchdehnung (EB) (%) der gereinigten Zellulosefaser eine Beziehung der folgenden allgemeinen Formel (1) erfüllen:

$$\frac{TB}{EB^{-0.52}} \geq 13 \quad \cdots (1)$$

8. Gereinigte Zellulosefaser nach einem der Ansprüche 1 bis 7,
wobei die Festigkeit (TB) (cN/dtex) der gereinigten Zellulosefaser gleich oder höher ist als 5,1 cN/dtex.

9. Gereinigte Zellulosefaser nach einem der Ansprüche 1 bis 8,
wobei die Festigkeit (TB) (cN/dtex) der gereinigten Zellulosefaser gleich oder höher ist als 5,4 cN/dtex.

10. Gereinigte Zellulosefaser nach einem der Ansprüche 1 bis 8,
wobei dieFestigkeit (TB) (cN/dtex) und die Bruchdehnung (EB) (%) der gereinigten Zellulosefaser eine Beziehung der folgenden allgemeinen Formel (2) erfüllen:

$$TB \times EB \leq 80 \quad \cdots (2)$$

11. Faserkautschukgemisch, das als zusammengesetztes Material mit einem Kautschukmaterial unter Verwendung der gereinigten Zellulosefaser nach einem der Ansprüche 1 bis 10 gebildet ist.

12. Reifen, der das Faserkautschukgemisch nach Anspruch 11 verwendet.

13. Reifen nach Anspruch 12, wobei das Faserkautschukgemisch als Karkassenlage verwendet wird.

14. Verfahren zum Herstellen einer gereinigten Zellulosefaser nach Anspruch 1,
wobei die gereinigte Zellulosefaser durch Nassspinnen oder Trocken-Nassspinnen einer zelluloseaufgelösten Flüssigkeit hergestellt wird, die durch Auflösen eines Zelluloserohmaterials in einer Flüssigkeit, die aus einer ionischen Flüssigkeit besteht, hergestellt wird.

## Revendications

1. Fibre de cellulose purifiée qui a un module élastique initial supérieur ou égal à 2,30 cN/dtex dans une région ayant un allongement de 0,5 % à 0,7 %,
la fibre de cellulose purifiée étant préparée par filage humide ou filage humide/à sec d'un liquide comprenant de la cellulose dissoute préparé par dissolution d'une matière première cellulosique dans un liquide consistant en un liquide ionique ; et
le module élastique initial a été obtenu à partir du gradient d'une ligne tangentielle d'une courbe de contrainte-déformation à un allongement de 0,5 à 0,7 %, la résistance (TB) (cN/dtex) de la fibre de cellulose purifiée étant supérieure ou égale à 3,9 et inférieure ou égale à 8,2 cN/dtex.

2. Fibre de cellulose purifiée selon la revendication 1,
dans laquelle un allongement à la rupture (EB) (%) de la fibre de cellulose purifiée est supérieur ou égal à 10,0 %, dans laquelle l'allongement à la rupture est un allongement au moment de la rupture de la fibre qui a subi une fausse torsion quatre fois pour 10 cm et a été soumise à un essai de traction en utilisant un testeur de traction dans les conditions de 25 °C et 55 % d'HR.

3. Fibre de cellulose purifiée selon les revendications 1 ou 2,
dans laquelle le liquide ionique comprend une partie cationique et une partie anionique, et
la partie cationique est une partie choisie dans le groupe constitué par un ion imidazolium, un ion pyridinium, un ion ammonium et un ion phosphonium.

4. Fibre de cellulose purifiée selon la revendication 3,
dans laquelle la partie cationique est un ion imidazolium exprimé par la formule générale (C1) suivante :

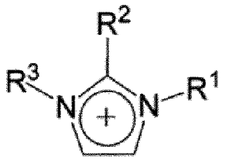

··· (C 1)

dans laquelle dans la formule, $R^1$ représente un groupe alkyle ayant de 1 à 4 atomes de carbone ou un groupe alcényle ayant de 2 à 4 atomes de carbone, $R^2$ représente un atome d'hydrogène ou un groupe méthyle, et $R^3$ représente un groupe alkyle ayant de 1 à 8 atomes de carbone ou un groupe alcényle ayant de 2 à 8 atomes de carbone.

5. Fibre de cellulose purifiée selon la revendication 3,
dans laquelle la partie anionique est formée à partir d'un composé comprenant du phosphore.

6. Fibre de cellulose purifiée selon la revendication 5,
dans laquelle le composé comprenant du phosphore de la partie anionique est l'un quelconque d'un ion phosphate, d'un ion phosphonate et d'un ion phosphinate exprimés par la formule générale (C2) suivante :

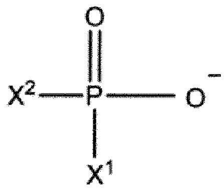

··· (C 2)

dans laquelle dans la formule, $X^1$ et $X^2$ sont indépendants, $X^1$ est un atome d'hydrogène, un groupe hydroxyle ou $OR^4$, $R^4$ représente un groupe alkyle ayant de 1 à 4 atomes de carbone, $X^2$ est un atome d'hydrogène ou $OR^5$, et $R^5$ représente un groupe alkyle ayant de 1 à 4 atomes de carbone.

**7.** Fibre de cellulose purifiée selon l'une quelconque des revendications 1 à 6,
dans laquelle la résistance (TB) (cN/dtex) et l'allongement à la rupture (EB) de la fibre de cellulose purifiée satisfont à une relation de la formule générale (1) suivante :

$$\frac{TB}{EB^{-0.52}} \geq 13 \quad \cdots (1)$$

**8.** Fibre de cellulose purifiée selon l'une quelconque des revendications 1 à 7,
dans laquelle la résistance (TB) (cN/dtex) de la fibre de cellulose purifiée est supérieure ou égale à 5,1 cN/dtex.

**9.** Fibre de cellulose purifiée selon l'une quelconque des revendications 1 à 8,
dans laquelle la résistance (TB) (cN/dtex) de la fibre de cellulose purifiée est supérieure ou égale à 5,4 cN/dtex.

**10.** Fibre de cellulose purifiée selon l'une quelconque des revendications 1 à 8,
dans laquelle la résistance (TB) (cN/dtex) et l'allongement à la rupture (EB) (%) de la fibre de cellulose purifiée satisfont à une relation de la formule générale (2) suivante :

$$TB \times EB \leq 80 \quad \cdots (2)$$

**11.** Composite de fibre-caoutchouc qui est formé sous forme d'un matériau composite avec un matériau caoutchouteux en utilisant la fibre de cellulose purifiée selon l'une quelconque des revendications 1 à 10.

**12.** Pneu qui utilise le composite de fibre-caoutchouc selon la revendication 11.

**13.** Pneu selon la revendication 12,
dans lequel le composite de fibre-caoutchouc est utilisé en tant que pli de carcasse.

**14.** Procédé de fabrication d'une fibre de cellulose purifiée selon la revendication 1,
dans lequel la fibre de cellulose purifiée est préparée par filage humide ou filage humide/à sec d'un liquide comprenant de la cellulose dissoute préparé par dissolution d'une matière première cellulosique dans un liquide consistant en un liquide ionique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010267898 A
- JP 2006188806 A
- JP 1943176 A
- JP S60144322 B
- JP 4242768 B
- JP 2008269477 A
- JP 101328626 B